# EUROPEAN PATENT SPECIFICATION

(11) **EP 1 909 072 B1**
(45) Date of publication and mention of the grant of the patent: **21.07.2010**
(21) Application number: 07018828.9
(22) Date of filing: 25.09.2007
(51) Int. Cl.: G01C 21/36, G08G 1/0968

(54) **Vehicle electronic system coupling a mobile navigation module to a vehicle audio module**
Elektronisches Fahrzeugsystem zur Kopplung eines mobilen Navigationsmoduls an ein Fahrzeugaudiomodul
Système électronique de véhicule pour coupler un module de navigation mobile à un module audio de véhicule

(30) Priority: 06.10.2006 EP 06021022
(43) Date of publication of application: 09.04.2008
(73) Proprietor: Harman Becker Automotive Systems GmbH, 76307 Karlsbad (DE)
(72) Inventor: Ohler, Jens, 75249 Kieselbronn (DE); Roessger, Peter, 72631 Aichtal (DE); Breining, Klaus, 71522 Backnang (DE)
(74) Representative: Bertsch, Florian Oliver

(56) References cited:
- EP-A- 1 216 890
- EP-A- 1 361 324
- EP-A2- 1 065 472
- WO-A-02/19540
- WO-A-99/38728
- WO-A-02/082405
- DE-A1- 10 141 190
- DE-A1- 19 923 701
- DE-A1-102004 009 275
- US-A1- 2003 193 390
- US-A1- 2003 208 314
- US-A1- 2003 231 550
- US-A1- 2004 098 571
- US-A1- 2005 237 150
- US-A1- 2006 085 128
- US-B1- 6 701 161

## Description

This invention relates to a vehicle electronic system coupling a mobile navigation module to a vehicle audio module and a method for coupling a mobile navigation module to a vehicle audio module. In particular, the present invention relates to a vehicle security system wherein the mobile navigation module coupled to a vehicle security module controls the vehicle security module in such a way that the mobile navigation module is used for enabling and disabling access to the vehicle.

Navigation systems are widely used for hiking, biking, city sightseeing, vehicle navigation, and so on. Special navigation systems for each kind of the above-mentioned applications are designed and available in the market, for example handheld mobile navigation systems for hiking, navigation systems mountable on a bicycle for biking, and navigation systems built into vehicles for vehicle navigation. A vehicle navigation system fixedly installed in a vehicle cannot be used by the user outside the vehicle, for example during hiking, and cannot be taken into another vehicle, for example from a private car into a rental car, and therefore many people additionally use a mobile navigation system, which can be used outside a vehicle, for example for biking and hiking, and which can also be used inside a vehicle. When used inside a vehicle, power supply cables need to be mounted from for example the cigarette lighter to the mobile navigation device, which usually leads to obstruction of displays or buttons, and the mobile navigation device is fixed in a special support at the dashboard or the windshield which also leads to obstruction of displays or buttons or the sight out of the windshield. Furthermore, the audio output of the mobile navigation device, for example for routing commands, is in most cases not appropriate for a use inside a vehicle, especially when the vehicle audio system is also producing audio output. Finally, supporting the mobile navigation device on a support mounted at the dashboard or the windshield is in most cases not very aesthetic, destroying the interior design of the vehicle, and may cause a danger during an accident of the vehicle.

Moreover, such a mobile navigation device is easily removable from the support of the vehicle. In case the user of the vehicle does not need the mobile navigation device outside the vehicle, the mobile navigation system is usually left in the support inside the vehicle and as mobile navigation devices are usually valuable devices, this attracts thieves to break open the car and to steel the mobile navigation device. On the other hand, when the user wants to protect the mobile navigation device from being stolen, he or she has to carry around not only the car keys and maybe a remote control or transponder for the centralized door locking of the vehicle, but also the mobile navigation device.

US 2003/ 193390 A1 discloses a system for remote controlling a vehicle. The system comprises a remote control system provide in the vehicle and a mobile phone adapted to communicate with the remote control system of the vehicle. After an authentication of the mobile phone at the remote control system of the vehicle, several functions of the vehicle can be controlled remotely, for example locking or unlocking the doors of the vehicle.

WO 02/082405 A discloses a navigation system for a vehicle with a removable unit which may be used as a mobile navigation system, when not connected with the navigation system of the vehicle. The removable unit comprises a display and operating means for operating the mobile navigation system outside the vehicle. When the removable unit is attached to the navigation system of the vehicle, the display of the removable unit may be used for indicating information of the navigation system of the vehicle.

US 2006/085128 A1 discloses a user-friendly directional device. The directional device comprises a simplified GPS navigation device and has a function for recording a current position upon activating a key of the device. On a user request, the directional device provides a direction from the current position of the device to the recorded positioning information. The device may also comprise a transmitter for locking and unlocking the vehicle.

There is a need for an integration of a mobile navigation system into the vehicle's infrastructure, wherein the mobile navigation device is fixed at an appropriate position inside the vehicle, and integrated in the operating means of the vehicle, for example audio output and speech recognition input, and wherein the mobile navigation device is still operable as stand alone unit outside the vehicle.

Furthermore, there is a need for an integration of a mobile navigation system into the vehicle's security infrastructure.

According to the invention, this need is met by a vehicle electronic system as defined in claim 1, and a method for enabling and disabling access to a vehicle by coupling a mobile navigation module to a vehicle audio module and a vehicle security module as defined in claim 29. The dependent claims define preferred and advantageous embodiments of the invention.

According to an aspect of the invention, a vehicle electronic system coupling a mobile navigation module to a vehicle audio module comprises the vehicle audio module, the mobile navigation module, and a vehicle security module of the vehicle controlling an access to the vehicle.

The vehicle audio module outputting an audio signal to the vehicle compartment comprises a first operating unit for providing an interface to the user and outputting status information of the vehicle audio module, a first control unit controlling the first operating unit, receiving signals from the first operating unit and transmitting signals to the first operating unit, and a first coupler for coupling the mobile navigation module to the vehicle audio module and providing a signal and data exchange between the vehicle audio module and the mobile navigation module.

The mobile navigation module comprises a second operating unit for providing an interface to the user and outputting status information of the mobile navigation module, a second control unit controlling the second operating unit, receiving signals from the second operating unit and transmitting signals to the second operating unit, and a second coupler for coupling the mobile navigation module to the vehicle audio module and providing a signal and data exchange between the vehicle audio module and the mobile navigation module.

Upon detection that the mobile navigation module is coupled to the vehicle audio module, the first control unit controls at least parts of the second operating unit.

The mobile navigation module is configured to couple to the vehicle security module for controlling the vehicle security module in such a way that the mobile navigation module is used for enabling and disabling access to the vehicle.

In such a vehicle electronic system, when the mobile navigation module is coupled to the vehicle audio module, the mobile navigation module can be mounted in front of the vehicle audio module obstructing displays or buttons of the vehicle audio module, but the vehicle audio module remains still operable as it can be operated via the second operating unit of the mobile navigation module and furthermore an integration of the display output of the vehicle audio module and the mobile navigation module can be accomplished by the first control unit controlling display outputs on the second operating unit.

Enabling access to the vehicle may comprise an unlocking of a door of the vehicle and disabling access to the vehicle may comprise a locking of the door of the vehicle. Therefore, the mobile navigation module may provide a key switch for enabling access to the vehicle and a key switch for disabling access to the vehicle. These key switches may be special key switches of the mobile navigation module, so-called "hard keys", or they may be formed as virtual key switches on a touch-sensitive display of the mobile navigation module or may be formed as programmable key switches, so called "soft keys", which provide the functions for enabling and disabling access to the vehicle in a certain state of the mobile navigation module.

In that the vehicle electronic system of the vehicle comprises the mobile navigation module for controlling the access to the vehicle, it can be assured that a user of the vehicle removes the mobile navigation module from the vehicle when leaving the vehicle providing a theft protection for the mobile navigation module. Furthermore, as the mobile navigation module incorporates the functionality of a conventional car key, remote control, or transponder for enabling and disabling access to the vehicle, the mobile navigation module makes the use of a car key and a remote control or transponder for controlling a door locking system of the vehicle obsolete.

The vehicle security module may also be adapted to control a starting mechanism of an engine of the vehicle and the mobile navigation module may additionally be configured to couple to the vehicle security module for controlling the vehicle security module in such a way that the mobile navigation module is used for starting the engine of the vehicle. Therefore, the mobile navigation module may provide a key switch, which may be for example a special "hard key" or a "soft key" of the mobile navigation module, for starting the engine of the vehicle.

By incorporating the control of the starting mechanism of the vehicle into the vehicle security module and the mobile navigation module, an additional theft protection for the vehicle is provided, as, if the mobile navigation module is removed from the vehicle, also the means for starting the engine of the vehicle is removed.

According to an embodiment of the vehicle security system, the vehicle electronic system further comprises a distance detection unit coupled to the vehicle security module for determining a distance between the vehicle security module and the mobile navigation module. When the distance detection unit determines that the mobile navigation module is located within a predetermined distance to the vehicle security module, the vehicle security module enables access to the vehicle. This enhances the use of the vehicle security system, in that the user of the vehicle does not need to press a key switch on the mobile navigation module for gaining access to the vehicle, but simply has to approach the vehicle while carrying the mobile navigation module.

According to an embodiment of the vehicle electronic system, the first control unit receives data from the second operating unit, processes the data received from the second operating unit and outputs data to the second operating unit. Furthermore, the second control unit can receive data from the first operating unit, process the data received from the first operating unit and output data to the first operating unit.

In a vehicle electronic system like this the operating units of both the vehicle audio module and the mobile navigation module can be controlled and therefore used as inputs and outputs of the user interface by the first control unit of the vehicle audio module as well as of the second control unit of the mobile navigation module. This offers an integrated operation of the combination of the mobile navigation module and the vehicle audio module and ensures furthermore that display outputs and/or control means of either the first operating unit or the second operating unit which are obstructed when the mobile navigation module is mounted at the vehicle audio module can be substituted by appropriate displays and means of the obstructing module. Therefore an integrated and complete operation of both modules, the mobile navigation module and the vehicle audio module, is secured.

According to another embodiment, the first and the second couplers comprise an electrical connection, an optical connection, or a radio frequency connection for the signal and data exchange between the vehicle audio module and the mobile navigation module.

Using an electrical connection is an economic and reliable means, which can be easily integrated into a coupler coupling the mobile navigation module and the vehicle audio module. In case higher bit rates between the mobile navigation module and the vehicle audio module are required or in case of stronger requirements concerning electromagnetical compatibility an optical connection may be advantageous. Finally, a radio frequency connection provides a connection between the vehicle audio module and the mobile navigation module without connecting the mobile navigation module physically to the vehicle audio module and enables therefore the integrated use of the mobile navigation module in the vehicle electronic system although the mobile navigation module may be placed in for example a bag or a pocket of the user.

According to another embodiment of the vehicle electronic system, the vehicle audio module comprises a power supply providing an electrical power supply for the mobile navigation module via the vehicle audio module through the first and second couplers.

In that the mobile navigation module is provided with electrical power from the vehicle audio module, the standby and operating times of the mobile navigation module are no longer limited to the standby or operating times based on a battery capacity of the mobile navigation module. Providing the electrical power for the mobile navigation module through the first and second couplers avoids the use of dedicated cables connecting the mobile navigation module with a power supply of the vehicle, for example a cigarette lighter.

According to another embodiment of the vehicle electronic system, the mobile navigation module comprises a rechargeable power supply, e.g. a rechargeable battery, and the vehicle audio module comprises charging means for charging the rechargeable power supply, wherein the rechargeable power supply is recharged by the charging means, when the mobile navigation module is coupled to the vehicle audio module.

Such an embodiment enables to recharge the mobile navigation device whenever it is coupled to and operated in the vehicle and enables therefore the recharging of the mobile navigation module during a longer journey without using an additional charger for the mobile navigation module.

According to another embodiment of the vehicle electronic system, the first and second operating units comprise a display, a control button, a speech control microphone and/or a loudspeaker.

Having a display and control buttons in each operating unit enables the vehicle audio module as well as the mobile navigation module to be operable independently, when the mobile navigation module is decoupled from the vehicle audio module. A speech control microphone enables the driver of the vehicle to operate the vehicle electronic system in a hands-free operating mode, which improves the driving safety. Audio outputs via a loudspeaker, for example for routing information, further improves the driving safety.

According to still another embodiment of the vehicle electronic system, the mobile navigation module comprises an access identifier and the vehicle audio module comprises an access identifier reader and a means for verifying an access identifier. After coupling the mobile navigation module to the vehicle audio module the access identifier reader of the vehicle audio module reads out the access identifier of the mobile navigation module and the means for verifying the access identifier verifies the read out access identifier of the mobile navigation module. Upon positive verification, the vehicle audio module grants access to the vehicle and/or allows to start the vehicle.

As the mobile navigation module is easily mountable to and detachable from the vehicle audio module, the access identifier of the mobile navigation module may function as an additional or as a main key for starting the vehicle. Additionally, if a coupling of the mobile navigation module to the vehicle audio module is accomplished via a radio frequency connection, the access identifier can also be used to grant access to the vehicle without mounting the mobile navigation module at the vehicle audio module, but just by bringing the mobile navigation module near to the vehicle audio module. Therefore, the mobile navigation module may substitute the car key and therefore reduces the number of things a user of the vehicle and the vehicle electronic system has to carry around.

According to yet another embodiment of the vehicle electronic system, the vehicle audio module comprises a sensor data receiving unit which is connected to sensors of the vehicle. The sensor data may e.g. comprise the speed of the vehicle and/or the steering angle of the vehicle. The sensor data receiving unit transmits the sensor data retrieved from the vehicle to a positioning unit of the mobile navigation module when the mobile navigation module is coupled to the vehicle audio module. The positioning unit uses the sensor data for supporting the position determination of the vehicle.

By using the sensor data retrieved from the vehicle additionally to the regular position determining means of the mobile navigation module, for example a satellite antenna receiving positioning data from a global positioning system based on satellites, the accuracy of the position determination can be increased, when the mobile navigation system is coupled to the vehicle audio module.

According to an embodiment of the vehicle electronic system, the first coupler comprises a detachable snap-in mechanism mounted at the front side of the vehicle audio module. The second coupler comprises a counterpart of the detachable snap-in mechanism provided at the backside of the mobile navigation module. The coupling of the mobile navigation module to the vehicle audio module comprises the inserting of the mobile navigation module into the detachable snap-in mechanism.

In that the mobile navigation module is fixedly mounted at the vehicle audio module after coupling, the display of the operating unit of the mobile navigation module is easily readable from the driver's or co-driver's seat, control buttons of the mobile navigation module are easily accessible and operable and a danger emerging from the mobile navigation module during an accident of the vehicle is substantially reduced.

According to still another embodiment of the vehicle electronic system, the mobile navigation module comprises a mobile audio player.

This feature enables a user of the vehicle electronic system to hear his favourite music stored on the mobile navigation module, for example as MP3 files, during use of the mobile navigation module in the vehicle as well as using the mobile navigation module outside the vehicle during hiking or biking.

According to another embodiment, the vehicle comprises a satellite antenna connected to the vehicle audio module for receiving radio frequency signals with which the position of the vehicle can be determined. The signal and data exchange between the mobile navigation module and the vehicle audio module comprises the signals received from the satellite antenna.

By using the satellite antenna of the vehicle a better receive quality of the satellite signals can be achieved and therefore the accuracy for the position determination of the vehicle enhanced.

According to another embodiment of the vehicle electronic system, the first control unit prioritizes the data to be output on the first and second operating units. Data of higher priority suppresses data of lower priority.

As a lot of data has to be processed and output by the vehicle electronic system a priorization of the output data is useful to avoid confusion of the driver. This refers to visual outputs via a display in the same way as to audible outputs via the loudspeakers of the vehicle compartment. The audible output may comprise music, traffic related massages and routing commands of the navigation system.

The invention will now be described in more detail with reference to the accompanying drawings, in which:
Fig. 1A shows a front view of a vehicle audio module, when no mobile navigation module is attached to the vehicle audio module;
Fig. 1B shows a front view of a mobile navigation module;
Fig. 1C shows a top view of the mobile navigation module of Fig. 1B;
Fig. 2 shows a front view of the vehicle audio module, wherein a mobile navigation module is attached to the vehicle audio module;
Fig. 3 shows a schematic view of the vehicle electronic system.
Fig. 4 shows a front view of another mobile navigation module configured for controlling a vehicle security module.
Fig. 5 shows a schematic view of a vehicle security system.

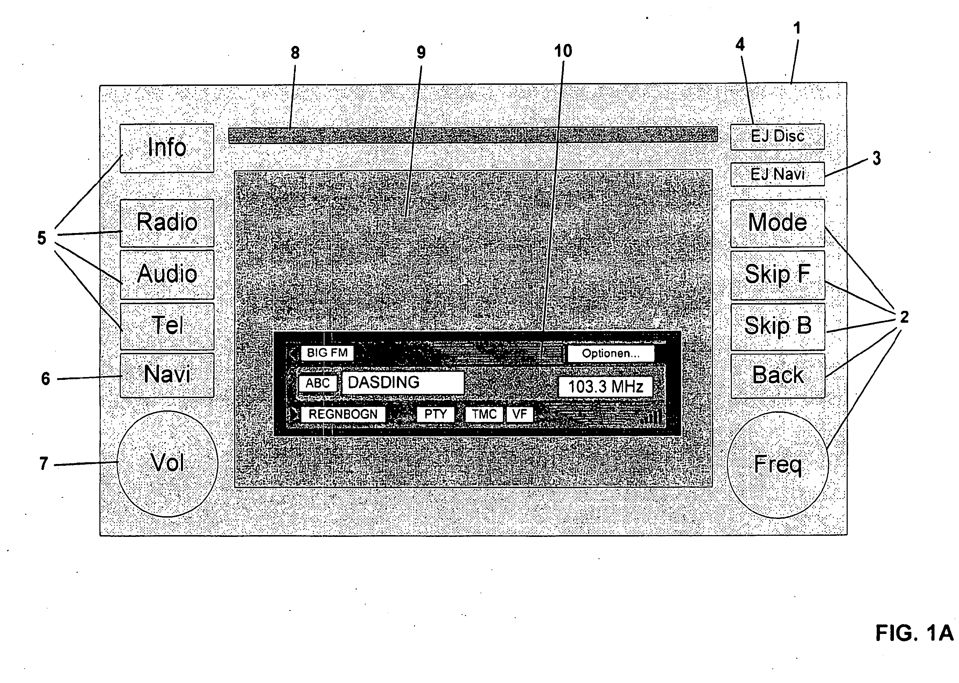

Fig. 1A shows a front view of a vehicle audio module 1. The vehicle audio module 1 may comprise a vehicle radio system, a vehicle compact disc player, a vehicle entertainment system or the like. The vehicle audio module 1 comprises a plurality of control buttons 2-7, a slot 8 for inserting a compact disk, a first coupler 9 for coupling a mobile navigation module to the vehicle audio module 1 and providing a signal and data exchange between the vehicle audio module 1 and the mobile navigation module, and a display 10. The vehicle audio module 1 can be mounted in a dashboard of a vehicle in such a way that the front side of the vehicle audio module as shown in Fig. 1A is located to be easily viewable and controllable by a driver or a codriver of the vehicle. The buttons 2-7 are provided for controlling the vehicle audio module 1 and the display 10 is provided to output status information of the vehicle audio module 1 to the user. In the following, the user interface of the vehicle audio module 1 comprising the control buttons 2-7 and the display 10 is called the first operating unit. The first operating unit may additionally comprise further input and output means for supporting the interface to the user, for example a microphone for receiving speech for a speech controlled operating of the vehicle audio module 1 and loudspeakers outputting an audio signal to the vehicle compartment providing status information about the vehicle audio module.

The first coupler 9 is adapted for receiving the mobile navigation module via a detachable snap-in mechanism which enables a fast insertion and removal of the mobile navigation module into and from the vehicle audio module 1.

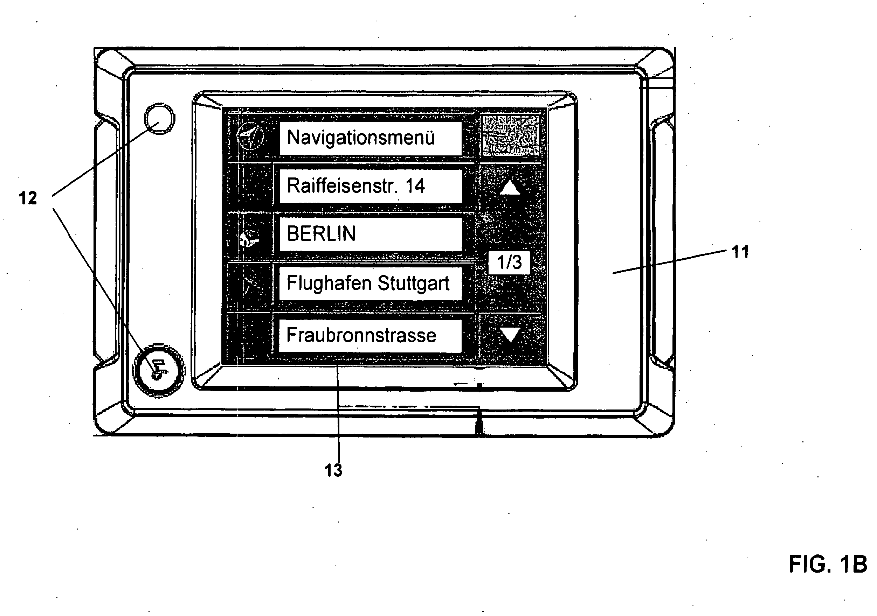

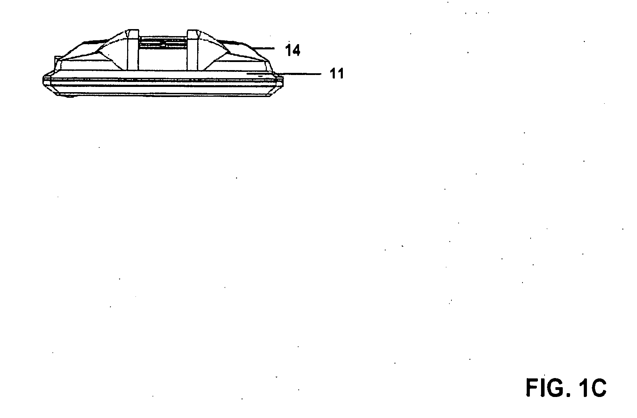

A front view and a top view of an embodiment of the mobile navigation module 11 is shown in Fig. 1B and 1C. The mobile navigation module 11 may for example comprise a satellite based mobile navigation module with an autonomous navigation data base or a server based mobile navigation module having a radio frequency data connection to a data communication network and to a navigation server for determining the position of the mobile navigation module and determining routing information. Further, the mobile navigation module may also comprise a mobile cellular phone determining the position of the phone either based on satellite information or based on information provided by the cellular network and providing routing information either based on autonomous routing information stored in the phone or based on routing information retrieved from a server provided in the cellular network.

The mobile navigation module 11 comprises a plurality of operating buttons 12, a display 13, and a second coupler 14 for coupling the mobile navigation module 11 to the vehicle audio module 1 and providing a signal and data exchange between the vehicle audio module 1 and the mobile navigation module 11. The display 13 may be a touchscreen which provides further operating means for controlling the mobile navigation module 11. The control buttons 12, the touchscreen of the display 13, and the display 13 provide a user interface for controlling the mobile navigation module 11, for example inputting a destination address and starting a route calculation to the destination, and outputting status information of the mobile navigation module, for example routing information on a map or routing commands for guiding the user to the desired destination. In the following, this user interface of the mobile navigation module 11 will be called second operating unit.

As can be seen in Fig. 1C, a second coupler 14 is provided on the backside of the mobile navigation module 11. This second coupler 14 is a counterpart to the first coupler 9 of the vehicle audio module 1 and enables an easy mounting of the mobile navigation module 11 at the vehicle audio module 1, by simply clippling the mobile navigation module 11 onto the first coupler 9 of the vehicle audio module 1. The snap-in mechanism of the first coupler 9 and the second coupler 14 provide a secure fixing of the mobile navigation module 11. Furthermore, the couplers provide a signal and data exchange between the vehicle audio module 9 and the mobile navigation module 11.

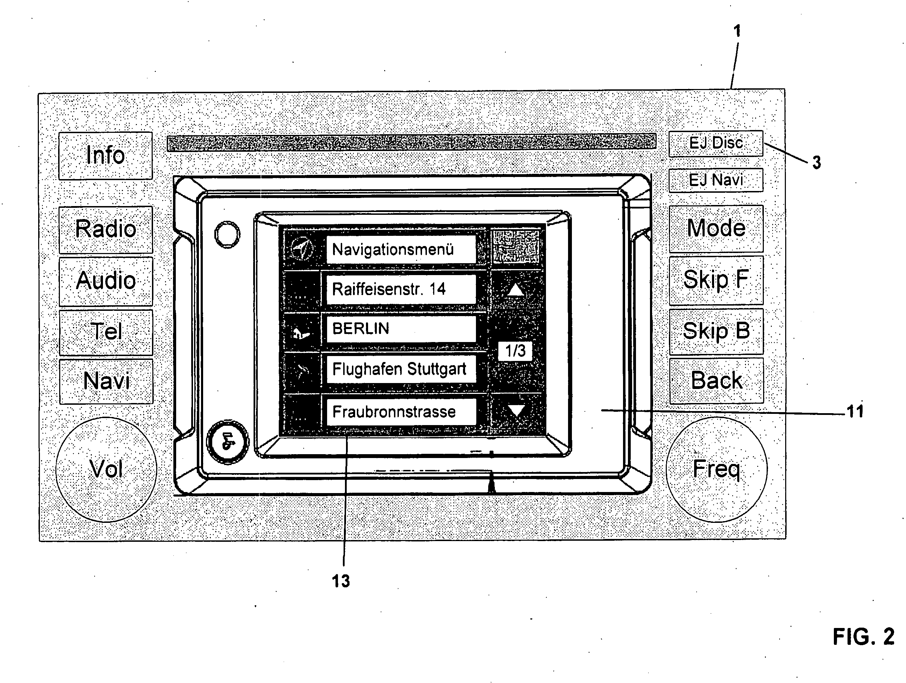

Fig. 2 shows the state when the mobile navigation module 11 is mounted at the vehicle audio module 1. As can be seen, in this embodiment, the display 10 of the vehicle audio module 1 is obstructed by the mobile navigation module 11 when the mobile navigation module 11 is attached to the vehicle audio module 1. Therefore, in this case the second operating unit, that means the display 13 is also used for outputting status information of the vehicle audio module 1. Furthermore, some of the control buttons 2-7 are now used to control the mobile navigation module 13. Vice versa, also the control buttons 12 and especially the touchscreen of the display 13 of the mobile navigation module 11 are now also usable for controlling the vehicle audio module 1. An additional control button 3 is provided at the vehicle audio module 1 for releasing the mobile navigation module 13 from the vehicle audio module 1.

When coupled to the vehicle audio module 1, the mobile navigation module 11 may use all features of the first control unit of the vehicle audio module 1, especially for example the audio output to the vehicle compartment for outputting routing information. As simultaneously other audio sources, for example a radio receiver or a CD player of the vehicle audio module 1 are outputting audio information to the vehicle compartment, a first control unit of the vehicle audio module 1 prioritizes and mixes the different audio sources before outputting the audio signals to the vehicle compartment. Prioritizing may comprise a lowering of the volume of audio sources with lower priority, for example music from a CD, before mixing the audio sources together and outputting them to the vehicle compartment. This ensures that a driver of the vehicle notices audio outputs of a higher priority, for example routing information, although audio outputs of lower priority are output at the same time, for example music from a CD player.

Visible outputs, for example radio frequency information, CD track information, a map of the mobile navigation module 11, or a routing information of the mobile navigation module 11, may also be prioritized and mixed by the first control unit of the vehicle audio module 1 before they are output on the display 13 of the mobile navigation module 11.

When the mobile navigation module 11 is detached from the vehicle audio module 1, both modules are usable as individual separate devices, that is, the vehicle audio module functions as a radio receiver and/or CD player outputting music and radio information to the vehicle's compartment and the mobile navigation module 11 is usable independently of the vehicle as a navigation device for hiking, biking and the like.

Although in the foregoing description the mobile navigation module 11 is coupled to the vehicle audio module 1 by inserting the mobile navigation module 11 into a snap-in mechanism 9 provided at the vehicle audio module 1, wherein the snap-in mechanism provides an electrical or optical connection for a signal and data exchange between the vehicle audio module 1 and the mobile navigation module 11, the signal and data exchange may also be accomplished by a wireless communication and therefore a physical connection between the mobile navigation module 11 and the vehicle audio module 1 is not necessary for coupling the two modules.

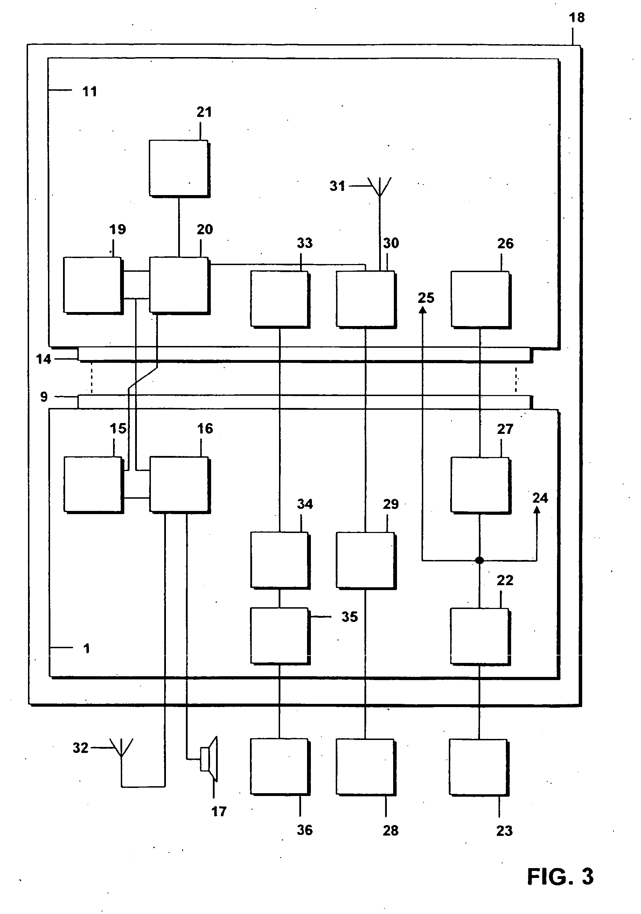

Fig. 3 shows a vehicle electronic system 18 comprising a mobile navigation module 11 and a vehicle audio module 1.

The vehicle audio module 1 comprises a first operating unit 15 and a first control unit 16. The first operating unit 15 may comprise a plurality of control buttons, a display, a microphone for speech input, and/or an audio output. Thus, the first operating unit 15 provides an interface to the user of the vehicle audio module 1 for controlling the features of the video audio module 1, for example a radio receiver and a CD player, and for outputting status information of the vehicle audio module 1 to the user. The first control unit 16 receives user inputs to the first operating unit 15 from the first operating unit 15 and performs the user-initiated actions on the vehicle audio module 1. In return, the first control unit 16 sends data to be output to the user to the first operating unit 15. Furthermore, the vehicle audio module 1 comprises a first coupler 9 for coupling a mobile navigation module to the vehicle audio module 1.

The mobile navigation module 11 comprises a second operating unit 19 connected to a second control unit 20. The second operating unit 19 comprises control buttons and a display as shown in Fig. 1B, for providing a user interface for controlling the mobile navigation module 11. When the user activates a control button 12 or touches the touchscreen of the display 13, this information is sent from the second operating unit 19 to the second control unit 20 and the second control unit 20 initiates or performs the required action in the mobile navigation module 11. In return, the second control unit 20 controls the output means of the second operating unit 19, for example the display 13, for outputting status information, for example map information or routing information. Furthermore, the mobile navigation module 11 comprises a second coupler 14 for coupling the mobile navigation module 11 to the vehicle audio module 1 and providing a signal and data exchange between the video audio module 1 and the mobile navigation module 11.

When coupling the mobile navigation module 11 to the vehicle audio module 1 via the first coupler 9 and the second coupler 14, a signal and data exchange between the first control unit 16 and the second operating unit 19 and the second control unit 20 is set up. The first control unit 16 is now controlling the first and the second operation units 15 and 19 which means in view of the embodiment of Figs. 1 and 2 that the first control unit 16 redirects all the display outputs from the first operating unit 15 to the second operating unit 19, as the display 10 of the first operating unit 15 is obstructed by the mobile navigation module 11. Furthermore, the first control unit 16 is now capable of receiving control inputs from the user via the touchscreen of the display 13 of the second operating unit 19 of the mobile navigation module 11 for operating functions of the audio vehicle module 1.

As the first control unit 16 is additionally connected with the second control unit 20, the second control unit 20 can transmit audio outputs of the mobile navigation module 11 to the first control unit 16 which then outputs these audio outputs via a loudspeaker 17 of the vehicle to the vehicle compartment. This allows an output of audio data, for example routing information or music data of a mobile audio player 21 comprised in the mobile navigation module 11 to the vehicle compartment via the vehicle loudspeaker system 17.

According to the embodiment of Fig. 3 the second control unit 20 is additionally connected with the first operating unit 15. This enables the second control unit 20 to use for example input means of the first operating unit 15, for example control buttons or a speech control microphone for operating the mobile navigation module 11.

An output of output data from the first control unit 16 on the second operating unit 19 can also be accomplished by sending the data to be output from the first control unit 16 to the second control unit 20 which then outputs the data on the second operating unit 19. This enables the output data of the first control unit 16 and the second control unit 20 to be properly mixed up and prioritized before being output on the second operating unit 19. The same applies to data to be output on the first operating unit 15.

As shown in Fig. 3, the vehicle audio module 1 further comprises a power supply 22, which is connected to the vehicle battery 23. The power supply 22 provides the vehicle audio module 1 with electrical power as indicated by arrow 24. Furthermore, the power supply 22 provides electrical power to the mobile navigation module 11 via the first and second couplers 9 and 14 as indicated by arrow 25. The mobile navigation module 11 comprising a battery 26 for supplying the mobile navigation module 11 with electrical energy is in the coupled state supplied with electrical energy from the vehicle battery 23 which substantially increases the operating time of the mobile navigation module 11.

According to the embodiment shown in Fig. 3 the vehicle audio module 1 comprises further a charging means 27, the input of which is connected with the power supply 22. The output of the charging means 27 is connected with the battery 26 of the mobile navigation module 11 via the first and second couplers 9 and 14. Therefore, when the mobile navigation module 11 is connected to the vehicle audio module 1, the battery 26 is recharged by the charging means 27. The charging means 27 can also be located in the mobile navigation system 11 and supplied with electrical energy via the vehicle audio module 1.

In the embodiment of Fig. 3 the vehicle audio module 1 is additionally connected to a sensor 28 of the vehicle and comprises a sensor data receiving unit 29. The sensor data receiving unit 29 is connected with a positioning unit 30 of the mobile navigation module 11. The positioning unit 30 is connected to the second control unit 20 and serves for determining the global position of the mobile navigation module 11. In the stand-alone operation of the mobile navigation module 11, the positioning unit 30 uses for example an internal satellite antenna 31 of the mobile navigation module 11 for determining the global position of the mobile navigation module 11. When connected to the vehicle audio module 1 providing additional sensor data of the vehicle, for example speed information and steering angle information, the positioning unit 30 uses this sensor data additionally to the positioning data retrieved from the satellite antenna for increasing the accuracy of the position determination. Furthermore, if the vehicle is provided with a satellite antenna 32 and the vehicle audio module 1 is connected to the satellite antenna 32, the first control unit 16 can receive the information received from the satellite via the satellite antenna 32, transmit this information to the second control unit 20 via the first and second couplers 9 and 14 and the second control unit 20 transmits this information to the positioning unit 30. As the antenna 32 is typically mounted at the outside of the vehicle, the quality of the received signal of the antenna 32 is much better than the signal received from the internal antenna 31 of the mobile navigation module 11. Therefore, using the external antenna 32 by the mobile navigation module 11, when the mobile navigation 11 is coupled to the vehicle audio module 1, increases the accuracy of the position determination of the mobile navigation module 11.

The embodiment shown in Fig. 3 shows furthermore an access identifier 33 comprised in the mobile navigation module 11 and an access identifier reader 34 and a means for verifying an access identifier 35 comprised in the vehicle audio module 1. When the mobile navigation module 11 is connected to the vehicle audio module 1, the access identifier reader 34 is connected to the access identifier 33 via the first and second couplers 9 and 14. Furthermore, the access identifier reader 34 is connected with the means for verifying an access identifier 35, and the means for verifying an access identifier 35 is connected to a vehicle access system and a vehicle ignition system 36. Upon coupling of the mobile navigation module 11 to the vehicle audio module 1 the access identifier reader 34 reads out the access identifier 33 and transmits the access identifier information to the means for verifying an access identifier 35. The means for verifying an access identifier 35 compares the received access identifier information with an internal access identifier or an internal list of access identifiers and transmits, in the case of a positive verification, a signal to the vehicle access and ignition system 36 for granting access to the vehicle and to the ignition system. The vehicle access system may comprise an automatic door unlocking mechanism and receiving a signal for granting access to the vehicle results in an unlocking of the doors of the vehicle. Thus, in case the first and second couplers 9 and 14 comprise a wireless radio frequency connection for the signal and data exchange between the vehicle audio module 1 and the mobile navigation module 11, a user of the mobile navigation module 11 can unlock the doors of the vehicle by just bringing the mobile navigation module 11 into the reach of the radio frequency connection of the first and second couplers 9 and 14 and optionally by pressing an unlock button of the mobile navigation module 11. Furthermore, starting of the engine of the vehicle may be released by the means for verifying an access identifier sending a release signal to the ignition system 36 of the vehicle upon positive verification of the access identifier 33 of the mobile navigation module 11.

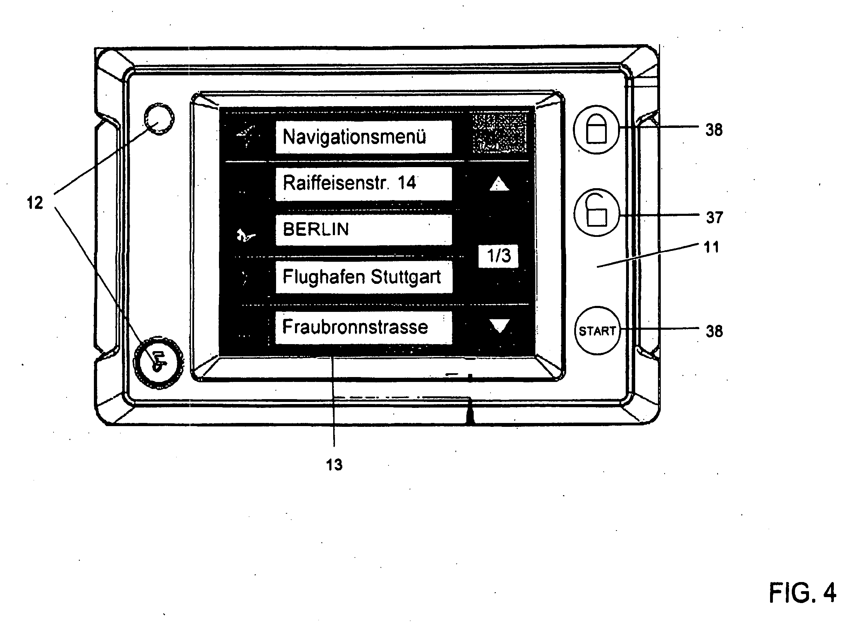

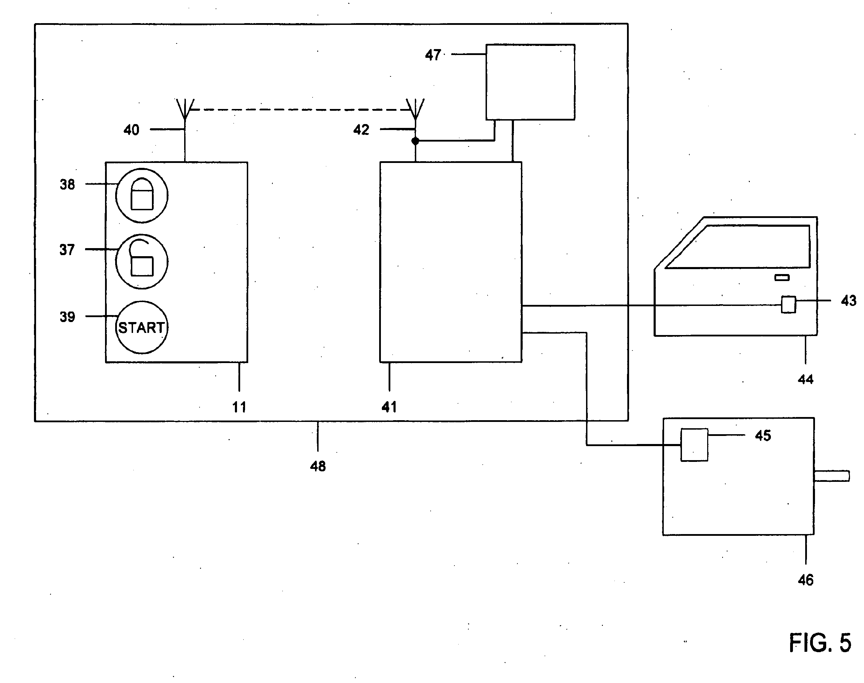

Fig. 4 shows a front view of another embodiment of the mobile navigation module 11. This mobile navigation module 11 provides dedicated key switches 37 to 39 for unlocking and locking doors of a vehicle and for starting an engine of the vehicle. The mobile navigation module 11 is additionally adapted to be coupled via a radio connection to a vehicle security module of the vehicle. Fig. 5 shows the vehicle security system 48 comprising the mobile navigation module 11 and the vehicle security module 41 schematically and will now be described in more detail.

The vehicle security system 48 comprises the mobile navigation module 11 as described above, which is adapted to guide a user to a predetermined or selected destination when being used outside the vehicle or when being installed within the vehicle, for example in connection with the vehicle audio module 1, as described above. The mobile navigation module provides a radio sender and an antenna 40 for transmitting control information for controlling the vehicle security module 41. Furthermore, the mobile navigation module 11 provides three additional key switches, a key switch 37 for controlling the opening of the doors of the vehicle, a key switch 38 for closing the doors of the vehicle, and a key switch 39 for controlling the start of the engine of the vehicle. These key switches may be either dedicated key switches or so-called "hard keys" as shown in Fig. 4, wherein each key switch a specific function is designated, or the key switches may be implemented as so-called "soft keys", wherein these key switches are virtually displayed on a touch-sensitive display 13 of the mobile navigation module 11.

Upon activation of any of the key switches 37 to 39, a corresponding radio signal is transmitted via the antenna of the mobile navigation module 11. This radio signal is received by an antenna 42 of the vehicle security module and verified by the vehicle security module 41, for example as described above. Upon a positive verification of the received radio signals, the vehicle security module 41 controls door locking mechanisms 43 in the doors 44 of the vehicle for locking or unlocking the doors of the vehicle in response to the received signal. Additionally, the vehicle security module controls a starter 45 of the engine 46 of the vehicle in response to a signal representing that the start key switch 39 of the mobile navigation module has been pressed. To avoid unintended starting of the engine 46 of the vehicle, additional conditions may be checked, before the vehicle security module activates the starter 45 of the engine 46. These additional conditions may for example comprise that the mobile navigation module is physically connected to the vehicle audio module or that a break pedal of the vehicle is pressed.

The vehicle security system 48 additionally comprises a distance detection unit 47 coupled to the vehicle security module and to the antenna 42 of the vehicle security system 48. The mobile navigation module 11 is configured to send out the door open signal continuously or in regular intervals and the distance detection unit 47 determines from the field intensity of the door open signal received via the antenna 42 if the mobile navigation module is approaching the vehicle and if the mobile navigation module 11 is within a certain distance of the vehicle. Based on this information from the distance detection unit 47, the vehicle security module 41 controls the door locking mechanism 43 of the door 44 of the vehicle to unlock the door 44 if the mobile navigation module 11 is located within a predetermined distance to the vehicle security module 41 or if the vehicle navigation module 11 is approaching the vehicle security module 41 and located within a predetermined distance to the vehicle security module 41.

The mobile navigation module 11 configured to couple to the vehicle security module 41 in the way described above, substitutes conventional vehicle access and starting means, for example remote controlled door locking mechanisms and car keys. Therefore, the user of the vehicle provided with such a vehicle security system 48 has to carry around less equipment and a better theft protection for the vehicle as well as for the mobile navigation module is provided.

Although in the description above radio frequence signals for opening and closing the doors of the vehicle sent from the mobile navigation module to the vehicle security module are described, a much more sophisticated method may be used, e.g. an exchange of encrypted signals, an encrypted protocol, or a protocol utilizing a rolling code as known in the art.

## Claims

1. A vehicle electronic system (18) coupling a mobile navigation module (11) to a vehicle audio module (1), the vehicle electronic system (18) comprising:
- the vehicle audio module (1) outputting an audio signal to the vehicle compartment, the vehicle audio module (1) comprising:
- a first operating unit (15) for providing an interface to the user and outputting status information of the vehicle audio module (1),
- a first control unit (16) controlling the first operating unit (15), receiving signals from the first operating unit (15) and transmitting signals to the first operating unit (15), and
- a first coupler (9) for coupling the mobile navigation module (11) to the vehicle audio module (1) and providing a signal and data exchange between the vehicle audio module (1) and the mobile navigation module (11),
- the mobile navigation module (11) comprising:
- a second operating unit (19) for providing an interface to the user and outputting status information of the mobile navigation module (11),
- a second control unit (20) controlling the second operating unit (19), receiving signals from the second operating unit (19) and transmitting signals to the second operating unit (19), and
- a second coupler (14) for coupling the mobile navigation module (11) to the vehicle audio module (1) and providing a signal and data exchange between the vehicle audio module (1) and the mobile navigation module (11), and **characterized by** further comprising
- a vehicle security module (41) of a vehicle controlling an access to the vehicle,
wherein the mobile navigation module (11) is configured to couple to the vehicle security module (41) for controlling the vehicle security module (41) in such a way that the mobile navigation module (11) is used for enabling and disabling access to the vehicle, and wherein upon detection that the mobile navigation module (11) is coupled to the vehicle audio module (1) the first control unit (16) controls at least parts of the second operating unit (19).

2. The vehicle electronic system (18) according to claim 1, wherein enabling access to the vehicle comprises an unlocking of a door (44) of the vehicle and disabling access to the vehicle comprises a locking of the door (44) of the vehicle.

3. The vehicle electronic system (18) according to claim 1 or 2, wherein the mobile navigation module (11) provides a key switch (37) for enabling access to the vehicle.

4. The vehicle electronic system (18) according to any of the preceding claims, wherein the mobile navigation module (11) provides a key switch (38) for disabling access to the vehicle.

5. The vehicle electronic system (18) according to any of the preceding claims, wherein the vehicle security module (41) is adapted to control a starting mechanism (45) of an engine (46) of the vehicle,
wherein the mobile navigation module (11) is configured to couple to the vehicle security module (41) for controlling the vehicle security module (41) in such a way that the mobile navigation module (11) is used for starting the engine (46) of the vehicle.

6. The vehicle electronic system (18) according to any of the preceding claims, wherein the mobile navigation module (11) provides a key switch (39) for starting the engine (46) of the vehicle.

7. The vehicle electronic system (18) according to any of the preceding claims, further comprising a distance detection unit (47) coupled to the vehicle security module (41) for determining a distance between the vehicle security module (41) and the mobile navigation module (11), wherein the vehicle security module (41) enables access to the vehicle when the mobile navigation module (11) is located within a predetermined distance to the vehicle security module (41).

8. The vehicle electronic system (18) according to any of the preceding claims,
wherein the first control unit (16) receives data from the second operating unit (19), processes the data received from the second operating unit (19) and outputs data to the second operating unit (19).

9. The vehicle electronic system (18) according to any of the preceding claims,
wherein the second control unit (20) receives data from the first operating unit (15), processes the data received from the first operating unit (15) and outputs data to the first operating unit (15).

10. The vehicle electronic system (18) according to any of claims 1-9, wherein the first and second couplers (9, 14) comprise an electrical connection, an optical connection, or a radio frequency connection for the signal and data exchange between the vehicle audio module (1) and the mobile navigation module (11).

11. The vehicle electronic system (18) according to any of claims 1-10, said vehicle audio module (1) comprises a power supply (22) providing an electrical power supply (25) for the mobile navigation module (11) via the vehicle audio module (1) through the first and second couplers (9, 14).

12. The vehicle electronic system (18) according to any of claims 1-11, wherein the mobile navigation module (11) comprises a rechargeable power supply (26) and the vehicle audio module (1) comprises charging means (27) for charging the rechargeable power supply (26), the rechargeable power supply (26) is recharged by the charging means (27), when the mobile navigation module (11) is coupled to the vehicle audio module (1).

13. The vehicle electronic system (18) according to any of claims 1-12, wherein the first and second operating units (15, 19) each comprise a display (10, 13), a control button (2-7, 12), a speech control microphone and/or a loudspeaker (17).

14. The vehicle electronic system (18) according to any of claims 1-13, wherein the mobile navigation module (11) comprises an access identifier (33) and the vehicle audio module (1) comprises an access identifier reader (34) and a means for verifying an access identifier (35), wherein, upon positive verification, the vehicle audio module (1) grants access to the vehicle and/or allows to start the vehicle.

15. The vehicle electronic system (18) according to any of claims 1-14, wherein the vehicle audio module (1) comprises a sensor data receiving unit (29) connected to sensors (28) of the vehicle and transmitting sensor data retrieved from the vehicle to a positioning unit (30) of the mobile navigation module (11) for supporting the position determination of the positioning unit (30), when the mobile navigation module (11) is coupled to the vehicle audio module (1).

16. The vehicle electronic system (18) according to claim 15, wherein the sensor data comprise the speed of the vehicle and/or the steering angle of the vehicle.

17. The vehicle electronic system (18) according to any of claims 1-16, wherein the first coupler (9) comprises a detachable snap-in mechanism, the second coupler (14) comprises a counterpart of the detachable snap-in mechanism, and the coupling of the mobile navigation module (11) to the vehicle audio module (1) comprises the inserting of the mobile navigation module (11) into the detachable snap-in mechanism.

18. The vehicle electronic system (18) according to any of claims 1-17, wherein the mobile navigation module (11) comprises a mobile audio player (21).

19. The vehicle electronic system (18) according to any of claims 1-18, wherein the vehicle comprises a satellite antenna (32) connected to the vehicle audio module (1) for receiving RF signals with which the position of the vehicle can be determined and the signal and data exchange between the mobile navigation module (11) and the vehicle audio module (1) comprises the signals received from the satellite antenna (32).

20. The vehicle electronic system (18) according to any of claims 1-19, wherein the first control unit (16) prioritizes the data to be output on the first and second operating units (15, 19), wherein data of higher priority suppresses data of lower priority.

21. The vehicle electronic system (18) according to any of claims 1-20, wherein, upon detection that the mobile navigation module (11) is coupled to the vehicle audio module (1), audio data of the mobile navigation module (11) are output by the vehicle audio module (1) to the vehicle compartment.

22. The vehicle electronic system (18) according to claim 21, wherein the audio data of the mobile navigation module (11) are transmitted from the second control unit (20) through the second coupler (14) and the first coupler (9) to the first control unit (16).

23. The vehicle electronic system (18) according to claim 21 or 22, wherein the audio data of the mobile navigation module (11) are mixed with the audio signal of the vehicle audio module (1) by the first control unit (16) and then output by the vehicle audio module (1) to the vehicle compartment.

24. The vehicle electronic system (18) according to any of claims 1-23, wherein, upon detection that the mobile navigation module (11) is coupled to the vehicle audio module (1), display data of the vehicle audio module (1) are displayed on a display (13) of the mobile navigation module (11).

25. The vehicle electronic system (18) according claim 24, wherein the display data of the vehicle audio module (1) are transmitted from the first control unit (16) through the first coupler (9) and the second coupler (14) to the second control unit (20).

26. The vehicle electronic system (18) according to any of claims 1-25, wherein the first operating unit (15) furthermore provides operating means capable for operating at least parts of the mobile navigation module (11).

27. The vehicle electronic system (18) according claim 26, wherein the operating means comprise a control button (2-7) and/or a speech control microphone.

28. The vehicle electronic system (18) according claim 26 or 27, wherein upon detection that the mobile navigation module (11) is coupled to the vehicle audio module (1), a signal generated upon operating the operating means is transmitted from the first control unit (16) through the first coupler (9) and the second coupler (14) to the second control unit (20).

29. A method for enabling and disabling access to a vehicle by coupling a mobile navigation module (11) to a vehicle audio module (1) and a vehicle security module (41),
the vehicle audio module (1) comprising:
- a first operating unit (15) for providing an interface to the user and outputting status information of the vehicle audio module (1), and
- a first control unit (16) controlling the first operating unit (15), receiving signals from the first operating unit (15) and transmitting signals to the first operating unit (15),
the mobile navigation module (11) comprising:
- a second operating unit (19) for providing an interface to the user and outputting status information of the mobile navigation module (11), and
- a second control unit (20) controlling the second operating unit (19), receiving signals from the second operating unit (19) and transmitting signals to the second operating unit (19),
the method comprising the steps of:
- controlling the first operating unit (15) by the first control unit (16),
- controlling the second operating unit (19) by the second control unit (20),
**characterized by**
- detecting, if the mobile navigation module (11) is coupled to the vehicle audio module (1),
- upon detection that the mobile navigation module (11) is coupled to the vehicle audio module (1), providing a signal and data exchange between
the vehicle audio module (1) and the mobile navigation module (11),
- upon detection that the mobile navigation module (11) is coupled to the vehicle audio module (1), controlling at least parts of the second operating unit (19) by the first control unit (16),
- coupling the mobile navigation module (11) adapted to guide a user to a predetermined destination to the vehicle security module (41) of the vehicle controlling the access to the vehicle and
- controlling the vehicle security module (41) by the mobile navigation module (11) in such a way that the mobile navigation module (11) is used for enabling and disabling access to the vehicle.

30. The method according to claim 29, wherein enabling access to the vehicle comprises an unlocking of a door (44) of the vehicle and disabling access to the vehicle comprises a locking of the door (44) of the vehicle.

31. The method according to claim 29 or 30, wherein the vehicle security module (41) is adapted to control a starting mechanism (45) of an engine (46) of the vehicle, the method further comprises the step of
controlling the vehicle security module (41) by the mobile navigation module (11) in such a way that the mobile navigation module (11) is used for starting the engine (46) of the vehicle.

32. The method according to any of claims 29-31, further comprising the steps of:
detecting a distance between the vehicle security module (41) and the mobile navigation module (11), and
enabling access to the vehicle when the mobile navigation module (11) is located within a predetermined distance to the vehicle security module (41).

33. The method according to any of claims 29-32,
wherein the first control unit (16) receives data from the second operating unit (19), processes the data received from the second operating unit (19) and outputs data to the second operating unit (19).

34. The method according to any of claims 29-33,
wherein the second control unit (20) receives data from the first operating unit (15), processes the data received from the first operating unit (15) and outputs data to the first operating unit (15).

35. The method according to any one of claims 29 to 34, wherein the mobile navigation module (11) comprises a rechargeable power supply (26) and the vehicle audio module (1) comprises charging means (27) for charging the rechargeable power supply (26), the method further comprises the step of, upon detection that the mobile navigation module (11) is coupled to the vehicle audio module (1), recharging the rechargeable power supply (26) by the charging means (27).

36. The method according to any one of claims 29 to 35 wherein the mobile navigation module (11) comprises an access identifier (33) and the vehicle audio module (1) comprises an access identifer reader (34) and a means for verifying an access identifier (35), wherein the method further comprises
- reading access identifier information from the access identifier (33) of the mobile navigation module (11),
- verifying the access identifier information
- upon positive verification, granting access to the vehicle and/or allowing to start the engine of the vehicle.

37. The method according to any one of claims 29 to 36, wherein the vehicle audio module (1) comprises a sensor data receiving unit (29) connected to sensors (28) of the vehicle and the method further comprises upon detection that the mobile navigation module (11) is coupled to the vehicle audio module (1):
- retrieving sensor data from the vehicle,
- transmitting sensor data to a positioning unit (30) of the mobile navigation module (11), and
- using the sensor data for determining the position of the vehicle.

38. The method according to any one of claims 29 to 37, further comprising the step of prioritizing the data to be output on the first and second operating units (15, 19), wherein data of higher priority suppresses data of lower priority.

39. The method according to any one of claims 29 to 38, further comprising the step of, upon detection that the mobile navigation module (11) is coupled to the vehicle audio module (1), outputting of audio data of the mobile navigation module (11) by the vehicle audio module (1) to the vehicle compartment.

40. The method according to claim 39, further comprising the step of mixing the audio data of the mobile navigation module (11) with the audio signal of the vehicle audio module (1).

41. The method according to any one of claims 29 to 40, further comprising the step of, upon detection that the mobile navigation module (11) is coupled to the vehicle audio module (1), displaying of display data of the vehicle audio module (1) on a display (13) of the mobile navigation module (11).

42. The method according to any one of claims 29 to 41, further comprising the steps of,
- providing operating means capable for operating at least parts of the mobile navigation module (11) at the first operating unit (15),
- generating a signal generated upon operating the operating means, and
- upon detection that the mobile navigation module (11) is coupled to the vehicle audio module (1), transmitting the signal generated upon operating the operating means from the first control unit (16) to the second control unit (20).

## Patentansprüche

1. Elektronisches Fahrzeugsystem (18), welches ein mobiles Navigationsmodul (11) mit einem Fahrzeugaudiomodul (1) koppelt, wobei das elektronische Fahrzeugsystem (18) umfasst:
- das Fahrzeugaudiomodul (1), welches ein Audiosignal an den Fahrzeugraum ausgibt, wobei das Fahrzeugaudiomodul (1) umfasst:
- eine erste Bedieneinheit (15) zum Bereitstellen einer Schnittstelle für einen Benutzer und Ausgeben einer Statusinformation des Fahrzeugaudiomoduls (1),
- eine erste Steuereinheit (16), welche die erste Bedieneinheit (15) steuert, Signale von der ersten Bedieneinheit (15) empfängt und Signale zu der ersten Bedieneinheit (15) überträgt, und
- eine erste Koppelvorrichtung (9) zum Koppeln des mobilen Navigationsmoduls (11) mit dem Fahrzeugaudiomodul (1) und Bereitstellen eines Signal- und Datenaustauschs zwischen dem Fahrzeugaudiomodul (1) und dem mobilen Navigationsmodul (11),
- das mobile Navigationsmodul (11) umfassend:
- eine zweite Bedieneinheit (19) zum Bereitstellen einer Schnittstelle für den Benutzer und zum Ausgeben einer Statusinformation des mobilen Navigationsmoduls (11),
- eine zweite Steuereinheit (20), welche die zweite Bedieneinheit (19) steuert, Signale von der zweiten Bedieneinheit (19) empfängt und Signale zu der zweiten Bedieneinheit (19) überträgt, und
- eine zweite Koppelvorrichtung (14) zum Koppeln des mobilen Navigationsmoduls (11) mit dem Fahrzeugaudiomodul (1) und zum Bereitstellen eines Signal- und Datenaustauschs zwischen dem Fahrzeugaudiomodul (1) und dem mobilen Navigationsmodul (11), und **dadurch gekennzeichnet, dass** es ferner umfasst:
- ein Fahrzeugsicherheitsmodul (41) eines Fahrzeugs, welches einen Zugriff auf das Fahrzeug steuert,
wobei das mobile Navigationsmodul (11) ausgestaltet ist, mit dem Fahrzeugsicherheitsmodul (41) gekoppelt zu werden, um das Fahrzeugsicherheitsmodul (41) auf derartige Art und Weise zu steuern, dass das mobile Navigationsmodul (11) zum Freigeben und Sperren eines Zugriffs auf das Fahrzeug verwendet wird, und wobei aufgrund einer Erfassung, dass das mobile Navigationsmodul (11) mit dem Fahrzeugaudiomodul (1) gekoppelt ist, die erste Steuereinheit (16) zumindest Teile der zweiten Bedieneinheit (19) steuert.

2. Elektronisches Fahrzeugsystem (18) nach Anspruch 1, wobei ein Freigeben eines Zugriffs auf das Fahrzeug ein Entriegeln einer Tür (44) des Fahrzeugs umfasst, und
wobei ein Sperren eines Zugriffs auf das Fahrzeug ein Verriegeln der Tür (44) des Fahrzeugs umfasst.

3. Elektronisches Fahrzeugsystem (18) nach Anspruch 1 oder 2, wobei das mobile Navigationsmodul (11) einen Schlüsselschalter (37) zum Freigeben eines Zugriffs auf das Fahrzeug bereitstellt.

4. Elektronisches Fahrzeugsystem (18) nach einem der vorhergehenden Ansprüche, wobei das mobile Navigationsmodul (11) einen Schlüsselschalter (38) zum Sperren eines Zugriffs auf das Fahrzeug bereitstellt.

5. Elektronisches Fahrzeugsystem (18) nach einem der vorhergehenden Ansprüche, wobei das Fahrzeugsicherheitsmodul (41) ausgestaltet ist, einen Startmechanismus (45) eines Motors (46) des Fahrzeugs zu steuern,
wobei das mobile Navigationsmodul (11) ausgestaltet ist, das Fahrzeugsicherheitsmodul (41) für ein Steuern des Fahrzeugsicherheitsmoduls (41) in einer derartigen Art und Weise zu koppeln, dass das mobile Navigationsmodul (11) zum Starten des Motors (46) des Fahrzeugs verwendet wird.

6. Elektronisches Fahrzeugsystem (18) nach einem der vorhergehenden Ansprüche, wobei das mobile Navigationsmodul (11) einen Schlüsselschalter (39) zum Starten des Motors (46) des Fahrzeugs bereitstellt.

7. Elektronisches Fahrzeugsystem (18) nach einem der vorhergehenden Ansprüche, ferner umfassend eine Entfernungserfassungseinheit (47), welche mit dem Fahrzeugsicherheitsmodul (41) gekoppelt ist, zum Bestimmen einer Entfernung zwischen dem Fahrzeugsicherheitsmodul (41) und dem mobilen Navigationsmodul (11), wobei das Fahrzeugsicherheitsmodul (41) einen Zugriff auf das Fahrzeug freigibt, wenn das mobile Navigationsmodul (11) innerhalb einer vorbestimmten Entfernung zu dem Fahrzeugsicherheitsmodul (41) angeordnet ist.

8. Elektronisches Fahrzeugsystem (18) nach einem der vorhergehenden Ansprüche,
wobei die erste Steuereinheit (16) Daten von der zweiten Bedieneinheit (19) empfängt, die von der zweiten Bedieneinheit (19) empfangenen Daten verarbeitet und Daten an die zweite Bedieneinheit (19) ausgibt.

9. Elektronisches Fahrzeugsystem (18) nach einem der vorhergehenden Ansprüche,
wobei die zweite Steuereinheit (20) Daten von der ersten Bedieneinheit (15) empfängt, die von der ersten Bedieneinheit (15) empfangenen Daten verarbeitet und Daten an die erste Bedieneinheit (15) ausgibt.

10. Elektronisches Fahrzeugsystem (18) nach einem der Ansprüche 1-9, wobei die erste und die zweite Koppelvorrichtung (9, 14) eine elektrische Verbindung, eine optische Verbindung oder eine Funkfrequenzverbindung für den Signal- und Datenaustausch zwischen dem Fahrzeugaudiomodul (1) und dem mobilen Navigationsmodul (11) umfassen.

11. Elektronisches Fahrzeugsystem (18) nach einem der Ansprüche 1-10, wobei das Fahrzeugaudiomodul (1) eine Stromversorgung (22) umfasst, welche eine elektrische Stromversorgung (25) für das mobile Navigationsmodul (11) über das Fahrzeugaudiomodul (1) durch die erste und zweite Koppelvorrichtung (9, 14) bereitstellt.

12. Elektronisches Fahrzeugsystem (18) nach einem der Ansprüche 1-11, wobei das mobile Navigationsmodul (11) eine wieder aufladbare Energieversorgung (26) umfasst und das Fahrzeugaudiomodul (1) ein Lademittel (27) zum Laden der wieder aufladbaren Energieversorgung (26) umfasst, wobei die wieder aufladbare Energieversorgung (26) von dem Lademittel (27) wieder aufgeladen wird, wenn das mobile Navigationsmodul (11) mit dem Fahrzeugaudiomodul (1) gekoppelt ist.

13. Elektronisches Fahrzeugsystem (18) nach einem der Ansprüche 1-12, wobei die erste und die zweite Bedieneinheit (15, 19) jeweils eine Anzeige (10, 13), eine Steuertaste (2-7, 12), ein Sprachsteuermikrophon und/oder einen Lautsprecher (17) umfassen.

14. Elektronisches Fahrzeugsystem (18) nach einem der Ansprüche 1-13, wobei das mobile Navigationsmodul (11) ein Zugriffidentifizierungszeichen (33) umfasst und das Fahrzeugaudiomodul (1) einen Leser (34) für ein Zugriffidentifizierungszeichen und ein Mittel zum Überprüfen eines Zugriffidentifizierungszeichens (35) umfasst, wobei, aufgrund einer positiven Überprüfung, das Fahrzeugaudiomodul (1) einen Zugriff auf das Fahrzeug gewährt und/oder ermöglicht, das Fahrzeug zu starten.

15. Elektronisches Fahrzeugsystem (18) nach einem der Ansprüche 1-14, wobei das Fahrzeugaudiomodul (1) eine Sensordatenempfangseinheit (29) umfasst, welche mit Sensoren (28) des Fahrzeugs verbunden ist und von dem Fahrzeug empfangene Daten zu einer Positionsbestimmungseinheit (30) des mobilen Navigationsmoduls (11) zum Unterstützen der Positionsbestimmung der Positionsbestimmungseinheit (30) überträgt, wenn das mobile Navigationsmodul (11) mit dem Fahrzeugaudiomodul (1) gekoppelt ist.

16. Elektronisches Fahrzeugsystem (18) nach Anspruch 15, wobei die Sensordaten die Geschwindigkeit des Fahrzeugs und/oder den Lenkwinkel des Fahrzeugs umfassen.

17. Elektronisches Fahrzeugsystem (18) nach einem der Ansprüche 1-16, wobei die erste Koppelvorrichtung (9) einen lösbaren Einrastmechanismus umfasst, wobei die zweite Koppelvorrichtung (14) ein Gegenstück zu dem lösbaren Einrastmechanismus umfasst, und wobei das Koppeln des mobilen Navigationsmoduls (11) mit dem Fahrzeugaudiomodul (1) das Einsetzen des mobilen Navigationsmoduls (11) in den lösbaren Einrastmechanismus umfasst.

18. Elektronisches Fahrzeugsystem (18) nach einem der Ansprüche 1-17, wobei das mobile Navigationsmodul (11) eine mobile Audiowiedergabevorrichtung (21) umfasst.

19. Elektronisches Fahrzeugsystem (18) nach einem der Ansprüche 1-18, wobei das Fahrzeug eine mit dem Fahrzeugaudiomodul (1) verbundene Satellitenantenne (32) zum Empfangen von Funkfrequenzsignalen umfasst, mit welchen die Position des Fahrzeugs bestimmt werden kann, und wobei der Signal- und Datenaustausch zwischen dem mobilen Navigationsmodul (11) und dem Fahrzeugaudiomodul (1) die von der Satellitenantenne (32) empfangenen Signale umfasst.

20. Elektronisches Fahrzeugsystem (18) nach einem der Ansprüche 1-19, wobei die erste Steuereinheit (16) die auf der ersten und der zweiten Bedieneinheit (15, 19) auszugebenden Daten priorisiert, wobei Daten höherer Priorität Daten geringerer Priorität unterdrücken.

21. Elektronisches Fahrzeugsystem (18) nach einem der Ansprüche 1-20, wobei, aufgrund einer Erfassung, dass das mobile Navigationsmodul (11) mit dem Fahrzeugaudiomodul (1) gekoppelt ist, Audiodaten des mobilen Navigationsmoduls (11) von dem Fahrzeugaudiomodul (1) an den Fahrzeugraum ausgegeben werden.

22. Elektronisches Fahrzeugsystem (18) nach Anspruch 21, wobei die Audiodaten des mobilen Navigationsmoduls (11) von der zweiten Steuereinheit (20) durch die zweite Koppelvorrichtung (14) und die erste Koppelvorrichtung (9) zu der ersten Steuereinheit (16) übertragen werden.

23. Elektronisches Fahrzeugsystem (18) nach Anspruch 21 oder 22, wobei die Audiodaten des mobilen Navigationsmoduls (11) mit dem Audiosignal des Fahrzeugaudiomoduls (1) von der ersten Steuereinheit (16) gemischt werden und dann von dem Fahrzeugaudiomodul (1) an den Fahrzeugraum ausgegeben werden.

24. Elektronisches Fahrzeugsystem (18) nach einem der Ansprüche 1-23, wobei, aufgrund einer Erfassung, dass das mobile Navigationsmodul (11) mit dem Fahrzeugaudiomodul (1) gekoppelt ist, Anzeigedaten des Fahrzeugaudiomoduls (1) auf einer Anzeige (13) des mobilen Navigationsmoduls (11) angezeigt werden.

25. Elektronisches Fahrzeugsystem (18) nach Anspruch 24, wobei die Anzeigedaten des Fahrzeugaudiomoduls (1) von der ersten Steuereinheit (16) durch die erste Koppelvorrichtung (9) und die zweite Koppelvorrichtung (14) zu der zweiten Steuereinheit (20) übertragen werden.

26. Elektronisches Fahrzeugsystem (18) nach einem der Ansprüche 1-25, wobei die erste Bedieneinheit (15) weiterhin Bedienmittel bereitstellt, welche in der Lage sind, zumindest Anteile des mobilen Navigationsmoduls (11) zu bedienen.

27. Elektronisches Fahrzeugsystem (18) nach Anspruch 26, wobei die Bedienmittel eine Steuertaste (2-7) und/oder ein Sprachsteuermikrofon umfassen.

28. Elektronisches Fahrzeugsystem (18) nach Anspruch 26 oder 27, wobei, aufgrund einer Erfassung, dass das mobile Navigationsmodul (11) mit dem Fahrzeugaudiomodul (1) gekoppelt ist, ein Signal, welches aufgrund einer Bedienung der Bedienmittel erzeugt wird, von der ersten Steuereinheit (16) durch die erste Koppelvorrichtung (9) und die zweite Koppelvorrichtung (14) zu der zweiten Steuereinheit (20) übertragen wird.

29. Verfahren zum Freigeben und Sperren eines Zugriffs auf ein Fahrzeug durch Koppeln eines mobilen Navigationsmoduls (11) mit einem Fahrzeugaudiomodul (1) und einem Fahrzeugsicherheitsmodul (41),
wobei das Fahrzeugaudiomodul (1) umfasst:
- eine erste Bedieneinheit (15) zum Bereitstellen einer Schnittstelle für den Benutzer und Ausgeben einer Statusinformation des Fahrzeugaudiomoduls (1), und
- eine erste Steuereinheit (16), welche die erste Bedieneinheit (15) steuert, Signale von der ersten Bedieneinheit (15) empfängt, und Signale zu der ersten Bedieneinheit (15) überträgt,
wobei das mobile Navigationsmodul (11) umfasst:
- eine zweite Bedieneinheit (19) zum Bereitstellen einer Schnittstelle für den Benutzer und Ausgeben einer Statusinformation des mobilen Navigationsmoduls (11), und
- eine zweite Steuereinheit (20), welche die zweite Bedieneinheit (19) steuert, Signale von der zweiten Bedieneinheit (19) empfängt, und Signale zu der zweiten Bedieneinheit (19) überträgt,
wobei das Verfahren die Schritte umfasst:
- Steuern der ersten Bedieneinheit (15) mit der ersten Steuereinheit (16),
- Steuern der zweiten Bedieneinheit (19) mit der zweiten Steuereinheit (20),
**gekennzeichnet durch**,
- Erfassen, ob das mobile Navigationsmodul (11) mit dem Fahrzeugaudiomodul (1) gekoppelt ist,
- aufgrund einer Erfassung, dass das mobile Navigationsmodul (11) mit dem Fahrzeugaudiomodul (1) gekoppelt ist, Bereitstellen eines Signal- und Datenaustauschs zwischen dem Fahrzeugaudiomodul (1) und dem mobilen Navigationsmodul (11),
- aufgrund einer Erfassung, dass das mobile Navigationsmodul (11) mit dem Fahrzeugaudiomodul (1) gekoppelt ist, Steuern von zumindest Anteilen der zweiten Bedieneinheit (19) durch die erste Steuereinheit (16),
- Koppeln des mobilen Navigationsmoduls (11), welches ausgestaltet ist, einen Benutzer zu einem vorbestimmten Ziel zu führen, mit dem Fahrzeugsicherheitsmodul (41) des Fahrzeugs, welches den Zugriff auf das Fahrzeug steuert, und
- Steuern des Fahrzeugsicherheitsmoduls (41) **durch** das mobile Navigationsmodul (11) in einer derartigen Art und Weise, dass das mobile Navigationsmodul (11) zum Freigeben und Sperren eines Zugriffs auf das Fahrzeug verwendet wird.

30. Verfahren nach Anspruch 29, wobei ein Freigeben des Zugriffs auf das Fahrzeug ein Entriegeln einer Tür (44) des Fahrzeugs umfasst, und wobei ein Sperren eines Zugriffs auf das Fahrzeug ein Verriegeln der Tür (44) des Fahrzeugs umfasst.

31. Verfahren nach Anspruch 29 oder 30, wobei das Fahrzeugsicherheitsmodul (41) ausgestaltet ist, einen Startmechanismus (45) eines Motors (46) des Fahrzeugs zu steuern, wobei das Verfahren ferner den Schritt umfasst
Steuern des Fahrzeugsicherheitsmoduls (41) durch das mobile Navigationsmodul (11) in einer derartigen Art und Weise, dass das mobile Navigationsmodul (11) zum Starten des Motors (46) des Fahrzeugs verwendet wird.

32. Verfahren nach einem der Ansprüche 29-31, ferner umfassend die Schritte:
Erfassen eines Abstands zwischen dem Fahrzeugsicherheitsmodul (41) und dem mobilen Navigationsmodul (11), und
Freigeben eines Zugriffs auf das Fahrzeug, wenn das mobile Navigationsmodul (11) innerhalb eines vorbestimmten Abstands zu dem Fahrzeugsicherheitsmodul (41) angeordnet ist.

33. Verfahren nach einem der Ansprüche 29-32,
wobei die erste Steuereinheit (16) Daten von der zweiten Bedieneinheit (19) empfängt, die von der zweiten Bedieneinheit (19) empfangenen Daten verarbeitet und Daten zu der zweiten Bedieneinheit (19) ausgibt.

34. Verfahren nach einem der Ansprüche 29-33,
wobei die zweite Steuereinheit (20) Daten von der ersten Bedieneinheit (15) empfängt, die von der ersten Bedieneinheit (15) empfangenen Daten verarbeitet und Daten zu der ersten Bedieneinheit (15) ausgibt.

35. Verfahren nach einem der Ansprüche 29-34, wobei das mobile Navigationsmodul (11) eine wieder aufladbare Energieversorgung (26) umfasst und das Fahrzeugaudiomodul (1) Lademittel (27) zum Laden der wieder aufladbaren Energieversorgung (26) umfasst, wobei das Verfahren ferner den Schritt umfasst: aufgrund einer Erfassung, dass das mobile Navigationsmodul (11) mit dem Fahrzeugaudiomodul (1) gekoppelt ist, wiederaufladen der wieder aufladbaren Energieversorgung (26) durch das Lademittel (27).

36. Verfahren nach einem der Ansprüche 29-35, wobei das mobile Navigationsmodul (11) ein Zugriffidentifizierungszeichen (33) umfasst und das Fahrzeugaudiomodul (1) einen Zugriffidentifizierungszeichenleser (34) und ein Mittel zum überprüfen eines Zugriffidentifizierungszeichens (35) umfasst, wobei das Verfahren ferner umfasst:
- Auslesen einer Zugriffidentifizierungszeicheninformation aus dem Zugriffidentifizierungszeichen (33) des mobilen Navigationsmoduls (11),
- Überprüfen der Zugriffidentifizierungszeicheninformation,
- aufgrund einer positiven Überprüfung ein Gewähren eines Zugriffs auf das Fahrzeug und/oder ein Ermöglichen, den Motor des Fahrzeugs zu starten.

37. Verfahren nach einem der Ansprüche 29-36, wobei das Fahrzeugaudiomodul (1) eine Sensordatenempfangseinheit (29) umfasst, welche mit Sensoren (28) des Fahrzeugs verbunden ist, und wobei das Verfahren ferner umfasst aufgrund einer Erfassung, dass das mobile Navigationsmodul (11) mit dem Fahrzeugaudiomodul (1) gekoppelt ist:
- Sensordaten von dem Fahrzeug abzufragen,
- Sensordaten zu einer Positionsbestimmungseinheit (30) des mobile Navigationsmoduls (11) zu übertragen, und
- die Sensordaten zum Bestimmen der Position des Fahrzeugs zu verwenden.

38. Verfahren nach einem der Ansprüche 29-37, ferner umfassend den Schritt eines Priorisierens der auf der ersten und zweiten Bedieneinheit (15, 19) auszugebenden Daten, wobei Daten von höherer Priorität Daten von niedrigerer Priorität unterdrücken.

39. Verfahren nach einem der Ansprüche 29-38, ferner umfassend den Schritt eines Ausgebens von Audiodaten des mobilen Navigationsmoduls (11) durch das Fahrzeugaudiomodul (1) an den Fahrzeugraum, aufgrund einer Erfassung, dass das mobile Navigationsmodul (11) mit dem Fahrzeugaudiomodul (1) gekoppelt ist.

40. Verfahren nach Anspruch 39, ferner umfassend den Schritt eines Mischens der Audiodaten von dem mobilen Navigationsmodul (11) mit dem Audiosignal des Fahrzeugaudiomoduls (1).

41. Verfahren nach einem der Ansprüche 29-40, ferner umfassend den Schritt eines Anzeigens von Anzeigedaten des Fahrzeugaudiomoduls (1) auf einer Anzeige (13) des mobilen Navigationsmoduls (11) aufgrund einer Erfassung, dass das mobile Navigationsmodul (11) mit dem Fahrzeugaudiomodul (1) gekoppelt ist.

42. Verfahren nach einem der Ansprüche 29-41, ferner umfassend die Schritte
- Bereitstellen eines Bedienmittels an der ersten Bedieneinheit (15) zum Bedienen von zumindest Anteilen des mobilen Navigationsmoduls (11),
- Erzeugen eines Signals, welches aufgrund eines Bedienens des Bedienmittels erzeugt wird, und
- aufgrund einer Erfassung, dass das mobile Navigationsmodul (11) mit dem Fahrzeugaudiomodul (1) gekoppelt ist, Übertragen des aufgrund einer Bedienung des Bedienmittels erzeugten Signals von der ersten Steuereinheit (16) zu der zweiten Steuereinheit (20).

## Revendications

1. Système électronique (18) de véhicule couplant un module de navigation mobile (11) à un module audio de véhicule (1), le système électronique de véhicule (18) comprenant:
- le module audio de véhicule (1) émettant un signal audio vers l'habitacle du véhicule, le module audio de véhicule (1) comprenant:
- une première unité opérationnelle (15) pour fournir une interface vers l'utilisateur et pour émettre une information d'état du module audio de véhicule (1),
- une première unité de commande (16) commandant la première unité opérationnelle (15), recevant des signaux de la première unité opérationnelle (15), et transmettant des signaux à la première unité opérationnelle (15), et
- un premier coupleur (9) pour coupler le module de navigation mobile (11) au module audio de véhicule (1) et pour fournir un échange de signaux et de données entre le module audio de véhicule (1) et le module de navigation mobile (11),
- le module de navigation mobile (11) comprenant:
- une deuxième unité opérationnelle (19) pour fournir une interface vers l'utilisateur et pour émettre une information d'état du module de navigation mobile (11),
- une deuxième unité de commande (20) commandant la deuxième unité opérationnelle (19), recevant des signaux de la deuxième unité opérationnelle (19), et transmettant des signaux à la deuxième unité opérationnelle (19), et
- un deuxième coupleur (14) pour coupler le module de navigation mobile (11) au module audio de véhicule (1) et pour fournir un échange de signaux et de données entre le module audio de véhicule (1) et le module de navigation mobile (11),
et **caractérisé en ce qu'**il comprend en outre:
- un module de sécurité véhicule (41) d'un véhicule commandant un accès au véhicule,
dans lequel le module de navigation mobile (11) est configuré pour se coupler au module de sécurité véhicule (41) pour commander le module de sécurité véhicule (41) de sorte que le module de navigation mobile (11) est utilisé pour autoriser et interdire l'accès au véhicule, et dans lequel, lors de la détection que le module de navigation mobile (11) est couplé au module audio de véhicule (1), la première unité de commande (16) commande au moins des parties de la deuxième unité opérationnelle (19).

2. Système électronique (18) de véhicule selon la revendication 1, dans lequel l'autorisation d'accès au véhicule comprend un déverrouillage d'une porte (44) du véhicule et
l'interdiction d'accès au véhicule comprend un verrouillage de la porte (44) du véhicule.

3. Système électronique (18) de véhicule selon la revendication 1 ou 2, dans lequel le module de navigation mobile (11) fournit un interrupteur à clef (37) pour autoriser l'accès au véhicule.

4. Système électronique (18) de véhicule selon l'une quelconque des revendications précédentes, dans lequel le module de navigation mobile (11) fournit un interrupteur à clef (38) pour interdire l'accès au véhicule.

5. Système électronique (18) de véhicule selon l'une quelconque des revendications précédentes, dans lequel le module de sécurité véhicule (41) est adapté pour commander un mécanisme de démarrage (45) d'un moteur (46) du véhicule, dans lequel le module de navigation mobile (11) est configuré pour se coupler au module de sécurité véhicule (41) pour commander le module de sécurité véhicule (41) de sorte que le module de navigation mobile (11) est utilisé pour démarrer le moteur (46) du véhicule.

6. Système électronique (18) de véhicule selon l'une quelconque des revendications précédentes, dans lequel le module de navigation mobile (11) fournit un interrupteur à clef (39) pour démarrer le moteur (46) du véhicule.

7. Système électronique (18) de véhicule selon l'une quelconque des revendications précédentes, comprenant en outre une unité de détection de distance (47) couplée au module de sécurité véhicule (41) pour déterminer une distance entre le module de sécurité véhicule (41) et le module de navigation mobile (11), dans lequel le module de sécurité véhicule (41) autorise l'accès au véhicule lorsque le module de navigation mobile (11) se trouve dans les limites d'une distance prédéterminée du module de sécurité véhicule (41).

8. Système électronique (18) de véhicule selon l'une quelconque des revendications précédentes,
dans lequel la première unité de commande (16) reçoit des données de la deuxième unité opérationnelle (19), traite les données reçues de la deuxième unité opérationnelle (19), et émet des données vers la deuxième unité opérationnelle (19).

9. Système électronique (18) de véhicule selon l'une quelconque des revendications précédentes,
dans lequel la deuxième unité de commande (20) reçoit des données de la première unité opérationnelle (15), traite les données reçues de la première unité opérationnelle (15), et émet des données vers la première unité opérationnelle (15).

10. Système électronique (18) de véhicule selon l'une quelconque des revendications 1-9, dans lequel les premier et deuxième coupleurs (9, 14) comprennent une connexion électrique, une connexion optique, ou une connexion radiofréquence pour l'échange de signaux et de données entre le module audio de véhicule (1) et le module de navigation mobile (11).

11. Système électronique (18) de véhicule selon l'une quelconque des revendications 1-10, ledit module audio de véhicule (1) comprenant un bloc d'alimentation (22) fournissant une alimentation en énergie électrique (25) pour le module de navigation mobile (11) par l'intermédiaire du module audio de véhicule (1) à travers les premier et deuxième coupleurs (9, 14).

12. Système électronique (18) de véhicule selon l'une quelconque des revendications 1-11, dans lequel le module de navigation mobile (11) comprend un bloc d'alimentation rechargeable (26), et le module audio de véhicule (1) comprend des moyens de charge (27) pour charger le bloc d'alimentation rechargeable (26), le bloc d'alimentation rechargeable (26) étant rechargé par les moyens de charge (27) lorsque le module de navigation mobile (11) est couplé au module audio de véhicule (1).

13. Système électronique (18) de véhicule selon l'une quelconque des revendications 1-12, dans lequel les première et deuxième unités opérationnelles (15, 19) comprennent chacune un afficheur (10, 13), un bouton de commande (2-7, 12), un microphone de commande vocale et/ou un haut-parleur (17).

14. Système électronique (18) de véhicule selon l'une quelconque des revendications 1-13, dans lequel le module de navigation mobile (11) comprend un identificateur d'accès (33), et le module audio de véhicule (1) comprend un lecteur d'identificateur d'accès (34) et un moyen pour vérifier un identificateur d'accès (35), dans lequel, suite à une vérification positive, le module audio de véhicule (1) autorise l'accès au véhicule et/ou permet le démarrage du véhicule.

15. Système électronique (18) de véhicule selon l'une quelconque des revendications 1-14, dans lequel le module audio de véhicule (1) comprend une unité de réception de données de capteur (29) connectée à des capteurs (28) du véhicule et transmettant des données de capteur récupérées du véhicule vers une unité de positionnement (30) du module de navigation mobile (11) pour assister à la détermination de position de l'unité de positionnement (30) lorsque le module de navigation mobile (11) est couplé au module audio de véhicule (1).

16. Système électronique (18) de véhicule selon la revendication 15, dans lequel les données de capteur comprennent le vitesse du véhicule et/ou l'angle de direction du véhicule.

17. Système électronique (18) de véhicule selon l'une quelconque des revendications 1-16, dans lequel le premier coupleur (9) comprend un mécanisme amovible d'encliquetage, le deuxième coupleur (14) comprend une partie complémentaire du mécanisme amovible d'encliquetage, et le couplage du module de navigation mobile (11) au module audio de véhicule (1) comprend l'insertion du module de navigation mobile (11) dans le mécanisme amovible d'encliquetage.

18. Système électronique (18) de véhicule selon l'une quelconque des revendications 1-17, dans lequel le module de navigation mobile (11) comprend un lecteur audio mobile (21).

19. Système électronique (18) de véhicule selon l'une quelconque des revendications 1-18, dans lequel le véhicule comprend une antenne de satellite (32) connectée au module audio de véhicule (1) pour recevoir des signaux RF à l'aide desquels la position du véhicule peut être déterminée, et l'échange de signaux et de données entre le module de navigation mobile (11) et le module audio de véhicule (1) comprend les signaux reçus de l'antenne de satellite (32).

20. Système électronique (18) de véhicule selon l'une quelconque des revendications 1-19, dans lequel la première unité de commande (16) priorise les données à émettre sur les première et deuxième unités opérationnelles (15, 19), dans lequel des données de priorité supérieure suppriment des données de priorité inférieure.

21. Système électronique (18) de véhicule selon l'une quelconque des revendications 1-20, dans lequel, lors de la détection que le module de navigation mobile (11) est couplé au module audio de véhicule (1), des données audio du module de navigation mobile (11) sont émis par le module audio de véhicule (1) vers l'habitacle du véhicule.

22. Système électronique (18) de véhicule selon la revendication 21, dans lequel les données audio du module de navigation mobile (11) sont transmis de la deuxième unité de commande (20) à travers le deuxième coupleur (14) et le premier coupleur (9) à la première unité de commande (16).

23. Système électronique (18) de véhicule selon la revendication 21 ou 22, dans lequel les données audio du module de navigation mobile (11) sont mélangées avec le signal audio du module audio de véhicule (1) par le première unité de commande (16), et puis émis par le module audio de véhicule (1) vers l'habitacle du véhicule.

24. Système électronique (18) de véhicule selon l'une quelconque des revendications 1-23, dans lequel, lors de la détection que le module de navigation mobile (11) est couplé au module audio de véhicule (1), des données d'affichage du module audio de véhicule (1) sont affichées sur un afficheur (13) du module de navigation mobile (11).

25. Système électronique (18) de véhicule selon la revendication 24, dans lequel les données d'affichage du module audio de véhicule (1) sont transmis de la première unité de commande (16) à travers le premier coupleur (9) et le deuxième coupleur (14) à la deuxième unité de commande (20).

26. Système électronique (18) de véhicule selon l'une quelconque des revendications 1-25, dans lequel la première unité opérationnelle (15) fournit en outre des moyens opérationnels aptes à actionner au moins des parties du module de navigation mobile (11).

27. Système électronique (18) de véhicule selon la revendication 26, dans lequel les moyens opérationnels comprennent un bouton de commande (2-7) et/ou un microphone de commande vocale.

28. Système électronique (18) de véhicule selon la revendication 26 ou 27, dans lequel, lors de la détection que le module de navigation mobile (11) est couplé au module audio de véhicule (1), un signal généré en actionnant le moyen opérationnel est transmis de la première unité de commande (16) à travers le premier coupleur (9) et le deuxième coupleur (14) à la deuxième unité de commande (20).

29. Procédé pour autoriser et interdire l'accès à un véhicule par accouplement d'un module de navigation mobile (11) avec un module audio de véhicule (1) et un module de sécurité véhicule (41),
le module audio de véhicule (1) comprenant:
- une première unité opérationnelle (15) pour fournir une interface vers l'utilisateur et pour émettre une information d'état du module audio de véhicule (1), et
- une première unité de commande (16) commandant la première unité opérationnelle (15), recevant des signaux de la première unité opérationnelle (15), et transmettant des signaux à la première unité opérationnelle (15),
le module de navigation mobile (11) comprenant:
- une deuxième unité opérationnelle (19) pour fournir une interface vers l'utilisateur et pour émettre une information d'état du module de navigation mobile (11), et
- une deuxième unité de commande (20) commandant la deuxième unité opérationnelle (19), recevant des signaux de la deuxième unité opérationnelle (19), et transmettant des signaux à la deuxième unité opérationnelle (19),
le procédé comprenant les étapes de:
- commander la première unité opérationnelle (15) par la première unité de commande (16),
- commander la deuxième unité opérationnelle (19) par la deuxième unité de commande (20),
**caractérisé par**
- la détection si le module de navigation mobile (11) est couplé au module audio de véhicule (1),
- lors de la détection que le module de navigation mobile (11) est couplé au module audio de véhicule (1), la fourniture d'un échange de signal et de données entre le module audio de véhicule (1) et le module de navigation mobile (11),
- lors de la détection que le module de navigation mobile (11) est couplé au module audio de véhicule (1), la commande au moins des parties de la deuxième unité opérationnelle (19) par la première unité de commande (16),
- l'accouplement du module de navigation mobile (11), adapté à guider un utilisateur vers une destination prédéterminée, au module de sécurité véhicule (41) du véhicule commandant l'accès au véhicule, et
- la commande du module de sécurité véhicule (41) par le module de navigation mobile (11), de sorte que le module de navigation mobile (11) est utilisé pour autoriser et interdire l'accès au véhicule.

30. Procédé selon la revendication 29, dans lequel l'autorisation d'accès au véhicule comprend un déverrouillage d'une porte (44) du véhicule, et
l'interdiction d'accès au véhicule comprend un verrouillage de la porte (44) du véhicule.

31. Procédé selon la revendication 29 ou 30, dans lequel le module de sécurité véhicule (41) est adapté à commander un mécanisme de démarrage (45) d'un moteur (46) du véhicule, le procédé comprenant en outre l'étape de commander le module de sécurité véhicule (41) par le module de navigation mobile (11), de sorte que le module de navigation mobile (11) est utilisé pour démarrer le moteur (46) du véhicule.

32. Procédé selon l'une quelconque des revendications 29-31, comprenant en outre les étapes de:
détecter une distance entre le module de sécurité véhicule (41) et le module de navigation mobile (11), et
autoriser l'accès au véhicule lorsque le module de navigation mobile (11) se trouve dans les limites d'une distance prédéterminée du module de sécurité véhicule (41).

33. Procédé selon l'une quelconque des revendications 29-32, dans lequel la première unité de commande (16) reçoit des données de la deuxième unité opérationnelle (19), traite les données reçues de la deuxième unité opérationnelle (19), et émet des données vers la deuxième unité opérationnelle (19).

34. Procédé selon l'une quelconque des revendications 29-33, dans lequel la deuxième unité de commande (20) reçoit des données de la première unité opérationnelle (15), traite les données reçues de la première unité opérationnelle (15), et émet des données vers la première unité opérationnelle (15).

35. Procédé selon l'une quelconque des revendications 29 à 34, dans lequel le module de navigation mobile (11) comprend un bloc d'alimentation rechargeable (26), et le module audio de véhicule (1) comprend des moyens de charge (27) pour charger le bloc d'alimentation rechargeable (26), le procédé comprenant en outre, lors de la détection que le module de navigation mobile (11) est couplé au module audio de véhicule (1), l'étape de recharger le bloc d'alimentation rechargeable (26) par le moyen de charge (27).

36. Procédé selon l'une quelconque des revendications 29 à 35, dans lequel le module de navigation mobile (11) comprend un identificateur d'accès (33), et le module audio de véhicule (1) comprend un lecteur d'identificateur d'accès (34) et un moyen pour vérifier un identificateur d'accès (35), dans lequel le procédé comprend en outre
- la lecture d'une information d'identificateur d'accès provenant de l'identificateur d'accès (33) du module de navigation mobile (11),
- la vérification de l'information d'identificateur d'accès,
- lors d'une vérification positive, l'autorisation d'accès au véhicule et/ou la permission de démarrer le moteur du véhicule.

37. Procédé selon l'une quelconque des revendications 29 à 36, dans lequel le module audio de véhicule (1) comprend une unité de réception de données de capteur (29) connectée aux capteurs (28) du véhicule, et le procédé comprend en outre, lors de la détection que le module de navigation mobile (11) est couplé au module audio de véhicule (1):
- la récupération des données de capteur du véhicule,
- la transmission de données de capteur à une unité de positionnement (30) du module de navigation mobile (11), et
- l'utilisation des données de capteur pour déterminer la position du véhicule.

38. Procédé selon l'une quelconque des revendications 29 à 37, comprenant en outre l'étape de prioriser les données à émettre sur les première et deuxième unités opérationnelles (15, 19), dans lequel des données de priorité supérieure suppriment des données de priorité inférieure.

39. Procédé selon l'une quelconque des revendications 29 à 38, comprenant en outre, lors de la détection que le module de navigation mobile (11) est couplé au module audio de véhicule (1), l'étape d'émettre des données audio du module de navigation mobile (11) par le module audio de véhicule (1) vers l'habitacle du véhicule.

40. Procédé selon la revendication 39, comprenant en outre l'étape de mélanger les données audio du module de navigation mobile (11) avec le signal audio du module audio de véhicule (1).

41. Procédé selon l'une quelconque des revendications 29 à 40, comprenant en outre, lors de la détection que le module de navigation mobile (11) est couplé au module audio de véhicule (1), l'étape d'afficher des données d'affichage du module audio de véhicule (1) sur un afficheur (13) du module de navigation mobile (11).

42. Procédé selon l'une quelconque des revendications 29 à 41, comprenant en outre les étapes de
- fournir des moyens opérationnels aptes à actionner au moins des parties du module de navigation mobile (11) dans la première unité opérationnelle (15),
- générer un signal généré après actionnement des moyens opérationnels, et
- lors de la détection que le module de navigation mobile (11) est couplé au module audio de véhicule (1), transmettre le signal généré après l'actionnement des moyens opérationnels de la première unité de commande (16) à la deuxième unité de commande (20).
